# EUROPEAN PATENT SPECIFICATION

(11) **EP 3 327 732 B1**
(45) Date of publication and mention of the grant of the patent: **01.05.2019**
(21) Application number: 16200293.5
(22) Date of filing: 23.11.2016
(51) Int. Cl.: H01B 9/00, H04L 12/10

(54) **HYBRID CABLE AND ASSOCIATED COMMUNICATION SYSTEM**
HYBRIDKABEL UND ZUGEHÖRIGES KOMMUNIKATIONSSYSTEM
CÂBLE HYBRIDE ET SYSTÈME DE COMMUNICATION ASSOCIÉ

(43) Date of publication of application: 30.05.2018
(73) Proprietor: Hexatronic Group AB, 412 51 Göteborg (SE)
(72) Inventor: Lo Curzio, Peter, 412 51 Göteborg (SE); Andersson, Karl-Ove, 412 51 Göteborg (SE)
(74) Representative: AWA Sweden AB

(56) References cited:
- WO-A1-2011/079564
- WO-A1-2015/168686
- WO-A1-2016/106152
- US-A1- 2011 170 835
- US-A1- 2015 078 740

## Description

### Technical field

The present disclosure generally relates to hybrid cables for conveying both optical signals and electric power. The present disclosure also relates to methods of installing such hybrid cables, and to communication systems comprising such hybrid cables.

### Background

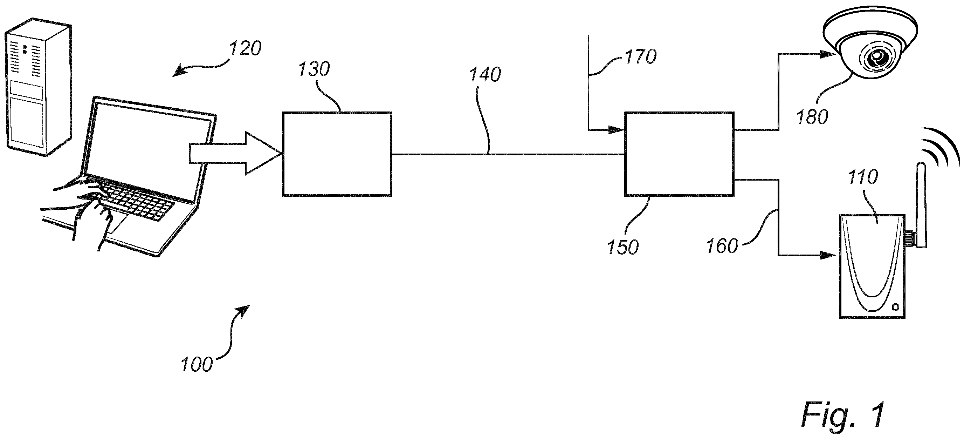

In order to provide high speed wireless connections for their customers, mobile network operators (or wireless service providers) may install wireless fidelity (WiFi) access points in certain areas or buildings, such as in shopping malls. Fig. 1 shows of a prior art communication system 100 including a WiFi access point 110 for transmitting and receiving wireless signals. Electric signals transmitted from a server 120 are converted into optical signals by a converter 130. The optical signals are transmitted over one or more optical fibres 140 to a location closer to the WiFi access point 110. A power over Ethernet (PoE) switch 150 converts the optical signals into electrical signals which are transmitted over an Ethernet cable 160 to the WiFi access point 110. While the fibres 140 may be employed for transferring data over long distances, the Ethernet cable 160 should not be too long (for example at most 100 meters for a category 6 cable). Factors which may cause restrictions on the length of Ethernet cables 160 include a desired signal to noise ratio, and/or a maximum acceptable delay. Therefore, the PoE switch 150 needs to be arranged relatively close to the WiFi access point 110. The PoE switch 150 is powered by a local power source 170. The local power source 170 may for example be provided in the form of line power (or grid power) converted by a power converter into a format suitable for powering the PoE switch 150 (for example 48 V direct current). In addition to providing data to the WiFi access point 110 via electric signals, the PoE switch 150 also provides power over the Ethernet cable 160 for powering the WiFi access point 110. Data from the WiFi access point 110 is also provided back via the Ethernet cable 160, the PoE switch 150, the fibres 140 and the converter 130 to the server 120.

In order to provide good wireless coverage, the mobile network operator may need to install WiFi access points 110 at many different locations. At some of these locations, there may be no power source available, or installation of the required wiring and/or power conversion may be complicated, for example due to lack of space. The mobile network operator may not own the locations or buildings in which the WiFi access points 110 are to be installed. In order to provide power to the PoE switches 150 and the WiFi access points 110, the mobile network operator may therefore need to make separate agreements with owners of each house in which the WiFi access points 110 are to be installed. Similar problems may arise for surveillance cameras 180 for which data communication and electric power is provided via PoE switches 150. In order to provide adequate coverage of an area, surveillance cameras 180 may need to be arranged at many different locations. At some of these locations, it may be difficult or complicated to provide power for the PoE switches 150 and/or the cameras 180.

It would be advantageous to provide an alternative way of powering electrical equipment associated with wireless communication (such as WiFi, 3G, 4G, or 5G) and/or surveillance cameras, which addresses one or more of the abovementioned issues.

Example prior art is disclosed in WO 2015/168686 A1 which describes a composite micro cable. The composite cable includes at least one buffer tube, at least one electrical power conductor, and at least one rigid strength member. Optical fibers are placed within the at least one buffer tube. The composite cable may be blown into a pathway established in a coaxial cable by the extraction of the inner conductor and the dielectric member of the coaxial cable. The composite cable may be employed to provide power and broadband services.

Example prior art is also disclosed in US 2015/078740 A1 which describes a fiber optic communications network. The network includes: a power insertion device, connected to multiple fiber links from a data source, configured to provide power insertion to a hybrid fiber/power cable connected to at least one fiber link of the multiple fiber links; the hybrid cable, connecting the power insertion device to a connection interface device, configured to transmit data and power from the power insertion device to the connection interface device; and the connection interface device, configured to provide an interface for connection to an end device via power over Ethernet (PoE)-compatible connection and to provide optical to electrical media conversion for data transmitted from the power insertion device to an end device via the hybrid cable and the PoE-compatible connection.

Example prior art is also disclosed in WO 2016/106152 A1 which describes a hybrid cable that transmits both electrical power and optical signals. The hybrid able has a transverse cross-sectional shape with multiple lobes and a generally circular outer boundary. At least some of the lobes surround and insulate the electrical conductors. The lobes surrounding the electrical conductors can be torn away from the remainder of the cable while continuing to insulate the electrical conductors.

### Summary

To better address one or more of the abovementioned issues, communication systems and associated methods having the features defined in the independent claims are provided. Preferable embodiments are defined in the dependent claims.

Hence, according to a first aspect, a communication system comprising a duct, a hybrid cable for conveying electric power at least 100 meters through the duct, a first converter, a second converter, a third converter, and a fourth converter is provided. At least a portion of the hybrid cable is located in the duct. The hybrid cable (which may also be referred to as a hybrid cable assembly) comprises an optical cable member, two electric cable members and a cable sheathing. The optical cable member comprises a signal transmitting member adapted to transmit (or convey) optical signals along the hybrid cable and a tubular enclosure enclosing the signal transmitting member. Each of the electric cable members comprises an electrically conductive interior for conveying electric power along the hybrid cable and an electrically insulating layer enclosing the electrically conductive interior. The cable sheathing encloses the optical cable member and the electric cable members. A thickness of the electrically insulating layer of at least one of (for example both of) the electrical cable members is less than or equal to 0.35 mm (or 0.30 mm, or 0.25 mm). The first converter has an optical interface and an electrical interface. The first converter is configured to provide conversion between optical signals at the optical interface and electrical signals at the electrical interface. The fourth converter has an optical interface and an electrical interface. The fourth converter is configured to provide conversion between optical signals at its optical interface and electrical signals at its electrical interface. The optical cable member is connected to the optical interface of the first converter and the optical interface of the fourth converter. The second converter is arranged to supply power to the first converter. The second converter comprises an interface connected to the electric cable members of the hybrid cable. The second converter is a power converter configured to convert electric power from a first power format received via the electric cable members into a second power format for powering the first converter. The first power format includes direct current at a voltage level of at least 75 Volt and at most 110 Volt. The third converter is connected to the electric cable members of the hybrid cable for providing direct current at a first voltage level to the electric cable members of the hybrid cable. The third converter is a power converter configured to convert a second voltage level into the first voltage level and/or configured to convert alternate current into direct current.

Hybrid cables comprising both optical fibres and electrical conductors are known in the art. In order to safely convey electric power, the conductors of such prior art hybrid cables are provided with certain amounts of insulation (for example compliant with the American wire gauge, AWG, system). This makes such prior art hybrid cables too thick to fit into at least some narrow ducts, and/or prevents such prior art hybrid cables from being conveniently blown (or cable jetted) long distances through such ducts.

The inventors have realized that existing infrastructure of ducts (or micro ducts, or tubes, or ducting), already employed for conveying data via optical fibres, could also be employed for conveying electric power, if new hybrid cables were designed to fit into such ducts. The inventors have realized that by appropriately selecting the electric power to be transferred through the hybrid cable (for example by selecting direct current instead of alternate current, and/or by selecting a certain voltage level), the required insulation for safely conveying the electric power may be reduced. In addition to the insulation provided in the hybrid cable, the ducts themselves may also contribute to protection of the electrically conductive interiors of the hybrid cable. The inventors have further realized that the reduced insulation thickness allows the hybrid cable diameter to be reduced. The reduced diameter facilitates insertion (or installation) of the hybrid cable into narrow ducts.

It will be appreciated that some parts or portions of the electrically insulating layers may for example be thicker than 0.35 mm (or 0.3 mm, or 0.25 mm).

A minimal thickness of the electrically insulating layer (i.e. a thickness of the insulating layer at a point where it is thinnest) of at least one of (or for each of) the electrical cable members may for example be at most 0.35 mm, or at most 0.30 mm, or at most 0.25 mm.

A shortest distance through the electrically insulating layer of at least one of (or for each of) the electrical cable members may for example be at most 0.35 mm, or at most 0.30 mm, or at most 0.25 mm.

A distance between the electrically conductive interiors of at least two of the electric cable members may for example be at most 0.75 mm, or 0.70 mm, or 0.60 mm, or 0.50 mm.

The electrically conductive interiors of at least two of the electric cable members may for example be separated by at most 0.75 mm, or 0.70 mm, or 0.60 mm, or 0.50 mm of electrically insulating material.

A combined thickness of electrically insulating material (or materials) arranged between the electrically conductive interiors of at least two of the electric cable members may for example be at most 0.75 mm, or 0.70 mm, or 0.60 mm, or 0.50 mm.

The optical cable member may for example comprise one or more optical fibres.

The optical cable member may for example comprise a loose tube cable arrangement including multiple optical fibres.

The optical cable member may for example comprise one or more tight buffered optical fibres.

The hybrid cable may for example comprise multiple optical cable members.

The hybrid cable may for example comprise more than two electric cable members.

The cable sheathing may for example be an outer cable sheathing (for example an outermost sheathing of the hybrid cable).

The signal transmitting members may for example comprise material suitable for conveying light.

According to some embodiments, a distance from a first electric cable member of the electric cable members to the electrically conductive interior of a second electric cable member of the electric cable members may be less than 0.35 mm (or 0.30 mm, or 0.25 mm), or a distance from the optical cable member to the electrically conductive interior of an electric cable member of the electric cable members may be less than 0.35 mm (or 0.30 mm, or 0.25 mm). In other words, a distance from at least one point in a first electric cable member of the electric cable members to at least one point in the electrically conductive interior of a second electric cable member of the electric cable members may be less than 0.35 mm (or 0.30 mm, or 0.25 mm), and/or a distance from at least one point in the optical cable member to at least one point in the electrically conductive interior of an electric cable member of the electric cable members may be less than 0.35 mm (or 0.30 mm, or 0.25 mm).

The relatively low insulation thickness may allow the electrically conductive interiors of the electrical cable members to be placed close to other parts of the hybrid cable (such as other electrical cable members or/or the optical cable member), which allows the diameter of the hybrid cable to be reduced.

For each of the electric cable members, it may for example hold that a distance from the electric cable member to the electrically conductive interior of another electric cable member of the electric cable members may be less than 0.35 mm (or 0.30 mm, or 0.25 mm), and/or that a distance from the optical cable member to the electrically conductive interior of the electric cable member may be less than 0.35 mm (or 0.30 mm, or 0.25 mm).

According to some embodiments, a diameter of each of the electric cable members (i.e., including the electrically insulating layer enclosing the electrically conductive layer) may be at most 2 mm, or at most 1.9 mm, or at most 1.8 mm, or at most 1.7 mm, or at most 1.6 mm.

If the voltage and current levels of the electric power transmitted through the hybrid cable are selected appropriately, electric cable members of such smaller diameter may be employed to safely convey electric power. A reduced diameter of the electric cable members may allow the diameter of the hybrid cable to be reduced.

According to some embodiments, a diameter of the hybrid cable may be at most 7.5 mm. The diameter if the hybrid cable may for example be at most 7 mm, or at most 6 mm. Thinner hybrid cables may be installed (for example pushed, pulled or blown) into narrower ducts.

Reducing the diameter of the hybrid cable may for example also reduce the weight of the hybrid cable. The weight of the hybrid cable may for example be at most 60 kg/km, or at most 50 kg/km. Lighter cables may be easier to blow into ducts than heavier cables.

According to some embodiments, the hybrid cable may comprise a strength member centrally located in the hybrid cable and extending axially along the hybrid cable. The optical cable member and the electric cable members may be distributed around the strength member.

The strength member may provide the hybrid cable with a certain degree of rigidity which facilitates blowing of the cable into ducts. At least for sufficiently light cables, strength members may not be necessary for blowing the cable into a duct.

Distributing the optical cable member and the electric cable members around the centrally located strength member is a way to provide symmetry in the hybrid cable, such that the hybrid cable behaves similarly in different directions (for example resistance to external forces such as bending).

According to some embodiments, the hybrid cable may comprise two optical cable members and four electric cable members. Each of the optical cable members may comprise a signal transmitting member adapted to transmit optical signals along the hybrid cable and a tubular enclosure enclosing the signal transmitting member. Each of the electric cable members may comprise an electrically conductive interior for conveying electric power along the hybrid cable and an electrically insulating layer enclosing the electrically conductive interior. The cable sheathing may enclose the strength member, the optical cable members and the electric cable members. The optical cable members and the electric cable members may be distributed around the strength member.

Increasing the number of electric cable members may allow a higher total electric power to be transmitted through the hybrid cable. The four optical cable members may for example be employed in two pairs for powering two different devices or subsystems (for example different access points or nodes in a communication system).

According to some embodiments, for each of the electric cable members (and for each of the optical cable members, in embodiments where the hybrid cable comprises multiple optical cable members), a distance from the optical cable member (for example from a point in the optical cable member closest to the center of the hybrid cable) to a center of the hybrid cable may be no longer than a factor 1.5 (or 1.4, or 1.3, or 1.2, or 1.1) times a distance from the electric cable member (for example from a point in the electric cable member closest to the center of the hybrid cable) to the center of the hybrid cable, and the distance from the electric cable member (for example from a point in the electric cable member closest to the center of the hybrid cable) to the center of the hybrid cable may be no longer than a factor 1.5 (or 1.4, or 1.3, or 1.2, or 1.1) times the distance from the optical cable member (for example from a point in the optical cable member closest to the center of the hybrid cable) to the center of the hybrid cable.

The electric cable members and the optical cable member (or optical cable members) may for example be distributed around the center of the hybrid cable at similar distances from the center of the hybrid cable. Such arrangement may contribute to the symmetry of the hybrid cable.

According to some embodiments, the first converter and the second converter may be comprised in a communication subsystem.

Electric power conveyed through the cable may experience a voltage drop, which may depend on the length of the hybrid cable. The second converter may allow the subsystem to take this voltage drop into account, for example by compensating for the voltage drop.

The second converter may for example be configured to receive direct current from the electric cable members. The second converter may for example be a direct current to direct current (DC-DC) converter. Use of direct current in the hybrid cable may for example allow the insulation in the hybrid cable to be reduced as compared to use of alternate current. However, embodiments may also be envisaged in which alternate current is conveyed in the hybrid cable at a lower voltage level.

The first converter may for example be configured to convert electrical signals into optical signals and/or to convert optical signals into electrical signals.

The first converter and the second converter may for example be arranged (or integrated) within the same casing, or in separate casings.

The first converter may for example be a PoE switch.

According to some embodiments, the communication system may comprise at least one device connected to the electrical interface of the first converter. The at least one device may include a camera (for example a surveillance camera), a sensor (for example an optical sensor or a heat sensor), and/or a wireless transmitter (i.e. a transmitter configured to transmit wireless signals).

The communication system may for example comprise one or more sensors employed for triggering an alarm
The first converter may for example be configured to provide data and electric power to the at least one device.

The first converter may for example be an alternate current to direct current (AC-DC) converter, or a direct current to direct current (DC-DC) converter.

The third converter may for example be configured to convert a higher voltage level into a lower voltage level.

The third converter may for example be configured to convert alternate current from line power (or grid power) into at most 120 V direct current.

The third converter may for example be configured to convert optical signals into electrical signals and/or to convert electrical signals into optical signals.

According to some embodiments, at least a portion of the hybrid cable may be located in a duct (for example in a microduct). The duct may for example comprise a cylindrical wall having a thickness of at least 1 mm. The duct may for example facilitate installation of the hybrid cable, and/or help protect the hybrid cable (e.g. for providing electrical safety).

According to some embodiments, a distance along the duct between at least one opening of the duct, via which the first and second converters are connected to the hybrid cable, and at least one opening of the duct, via which the third and fourth converters are connected to the hybrid cable, may be at least 100 meters (or at least 200, 300, 400, or 500 meters).

According to a second aspect, there is provided an installation method. The installation method comprises providing a hybrid cable for conveying electric power at least 100 meters through a duct. The hybrid cable comprises an optical cable member, two electric cable members, and a cable sheathing enclosing the optical cable member and the electric cable members. The optical cable member comprises a signal transmitting member adapted to transmit optical signals along the hybrid cable and a tubular enclosure enclosing the signal transmitting member. Each of the electric cable members comprises an electrically conductive interior for conveying electric power along the hybrid cable and an electrically insulating layer enclosing the electrically conductive interior. A thickness of the electrically insulating layer of at least one of the electrical cable members is less than or equal to 0.35 mm. The installation method may comprise inserting into a duct an end of the hybrid cable, blowing at least part of the hybrid cable at least partly through the duct, connecting the optical cable member to an optical interface of a first converter, wherein the first converter is configured to provide conversion between optical signals at the optical interface and electrical signals at an electrical interface, and connecting the optical cable member to an optical interface of a fourth converter, wherein the fourth converter is configured to provide conversion between optical signals at its optical interface and electrical signals at an electrical interface of the fourth converter. The method further comprises connecting the electric cable members to an interface of a second converter. The second converter is arranged to supply power to the first converter. The second converter is a power converter configured to convert electric power from a first power format received via the electric cable members into a second power format for powering the first converter. The first power format includes direct current at a voltage level of at least 75 Volt and at most 110 Volt. The method further comprises connecting the electric cable members to a third converter. The third converter is arranged to provide direct current at a first voltage level to the electric cable members of the hybrid cable. The third converter is a power converter configured to convert a second voltage level into the first voltage level and/or configured to convert alternate current into direct current.

The hybrid cable may for example be blown into the duct via cable jetting. The hybrid cable may for example be pushed (or fed) into the duct while blowing the hybrid cable through the duct.

According to some embodiments, the method may comprise blowing at least part of the hybrid cable through at least 100 meters of the duct. The method may for example comprise blowing at least part of the hybrid cable through at least 200, 300, 400 or 500 meters of the duct. If the diameter of the hybrid cable is too close to the inner diameter of the duct, it may be difficult to blow the hybrid cable long distances through the duct.

According to some embodiments, the duct may have an inner diameter of at most 13 mm, or at most 12 mm, or at most 11 mm, or at most 10 mm, or at most 9 mm, or at most 8 mm.

According to some embodiments, the electric power conveyed by the hybrid cable through the duct may have a voltage of at most 110 V, or at most 100 V, or at most 90 V.

The electric power conveyed through the duct may for example have a current level of at most 3 A (Ampere), or at most 4 A, or at most 5 A, or at most 10 A.

It is noted that embodiments of the present disclosure relate to all possible combinations of features recited in the claims. It will be appreciated that the various embodiments described for the communication system, according to the first aspect, are combinable with installation methods according to the second aspect. It will also be appreciated that the advantages presented above for features of embodiments according to one of these two aspects may generally be valid for the corresponding features of embodiments according to the other aspect.

### Brief description of the drawings

In what follows, example embodiments will be described in greater detail and with reference to the accompanying drawings, on which:
Fig. 1 shows a prior art communication system;
Fig. 2 shows a communication system according to an embodiment;
Fig. 3 shows a cross section of a hybrid cable used in a communication system according to an embodiment;
Fig. 4 shows a cross section of a hybrid cable used in a communication system according to an embodiment; and
Fig. 5 shows a communication system including multiple WiFi access points, according to an embodiment.

All the figures are schematic and generally only show parts which are necessary in order to elucidate the respective embodiments, whereas other parts may be omitted or merely suggested.

### Detailed description

Fig. 1 shows a prior art communication system 100. This communication system 100 has been described above in the background section. The inventors have realized that the local power supply 170 may be replaced by a centrally located power supply if electrical power can be conveyed through a duct together with fibres carrying optical signals between the converter 130 and PoE switch 150.The duct may for example be a plastic tube through which fibre cables may be blown via cable jetting. Such techniques for installing fibre cables are well-known in the art. By proving electrical power through a duct, the electrical conductors may be protected by the duct. Further, there may be no need to provide additional room outside the duct for electrical wiring from a centrally located power source to the PoE switch 150 or the WiFi access point 110. For example, an existing infrastructure of ducts already employed for conveying data could be employed also for conveying electric power.

Hybrid cables comprising both optical fibres and electrical conductors are known in the art. However, the electrical insulation required to safely convey electric power typically makes such hybrid cables too thick and/or heavy to be conveniently fed through long and narrow ducts, for example via cable jetting. In other words, such prior art hybrid cables may not be suitable for providing power to the PoE switch 150 through an already existing infrastructure of ducts. For example, some of these prior art hybrid cables comprise American wire gauge (AWG) cables which have rather thick insulating and protective layers.

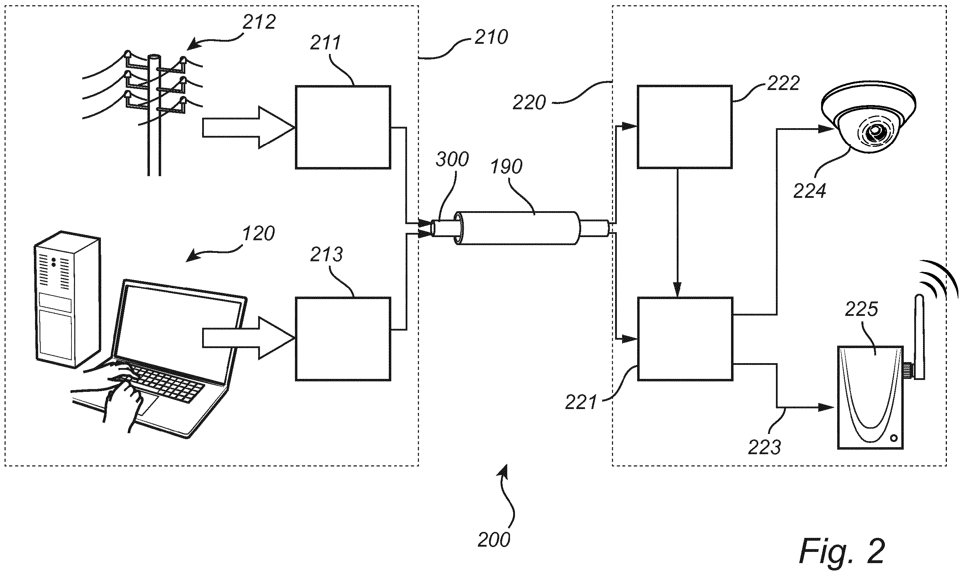

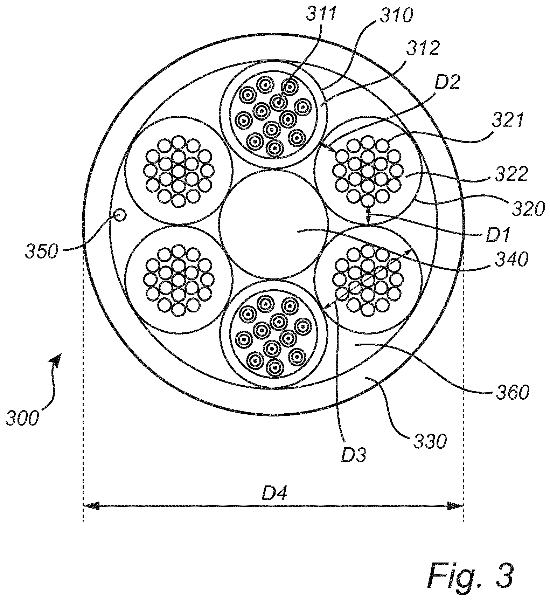

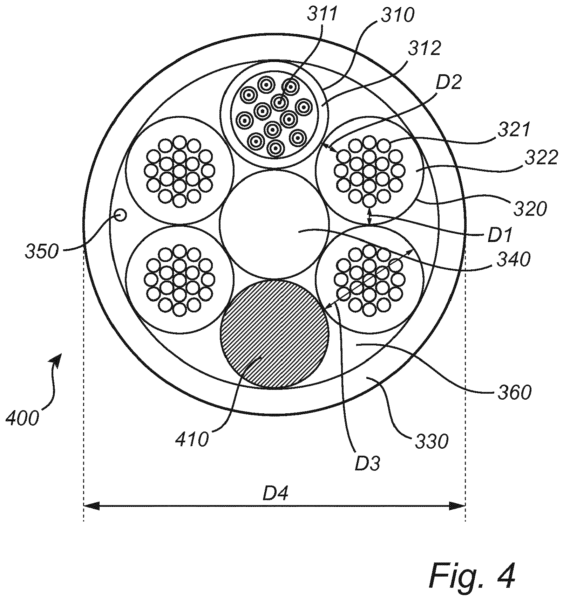

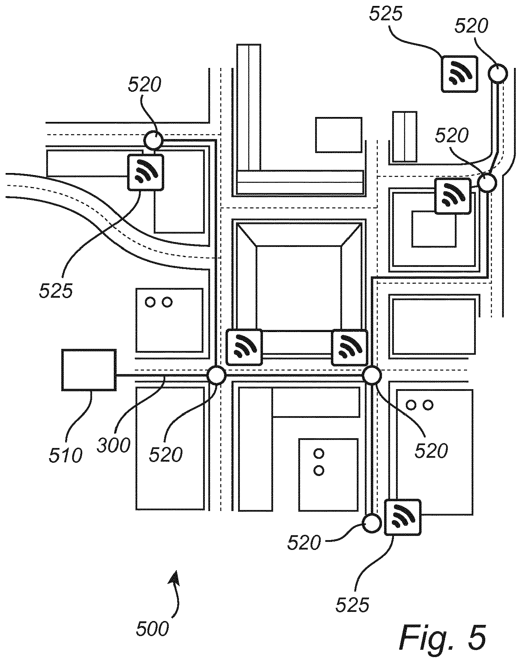

The inventors have realized that the insulation required for safely conveying electric power may be reduced if a suitable voltage level is employed, and that this allows for providing hybrid cables with smaller diameter. Communication systems employing such hybrid cables will first be described with reference to Figs. 2 and 5. Example hybrid cables will then de described in detail with reference to Figs. 3 and 4.

Fig. 2 shows a communication system 200 according to an embodiment. The communication system 200 has several elements in common with the communication system 100, described with reference to Fig. 1, but electrical power is conveyed through a duct 190 via a hybrid cable 300 instead of being provided by a local power source 170. The hybrid cable 300 includes electrical cable members (which may also be referred to as conductors) and optical cable members (which comprise signal transmitting members such as optical fibres), and will be described in detail below with reference to Fig 3.

The duct 190 may for example have a cylindrical wall. The wall may for example be at least 1 mm thick. The wall may for example be made of plastic material.

The communication system 200 comprises a first subsystem 210 at one end of the duct 190 and a second subsystem 220 at the other end of the duct 190.

The first subsystem 210 comprises a converter 211 connected to electric cable members of the hybrid cable 300 for proving electric power to the electric cable members 300 of the hybrid cable 300. The converter 211 is a power converter 211 configured to convert electric power received from a power source 212 (such as line power or grid power) into a format suitable for transmission through the hybrid cable 300. The first subsystem 210 also comprises another converter 213 having an optical interface and an electrical interface. This other converter 213 is an electro-optical converter 213 configured to provide conversion between optical signals at its optical interface and electrical signals at its electrical interface. The optical interface of the electro-optical converter 213 is connected to one or more optical cable members of the hybrid cable 300 for communication through the hybrid cable 300. In the present embodiment, a server 120 provides electrical signals to the electro-optical converter 213 which converts these electrical signals into optical signals for transmission through the hybrid cable 300. The electro-optical converter 213 corresponds to the converter 130 in the communication system 100 described with reference to Fig. 1.

The second subsystem 220 comprises a first converter 221 having an optical interface and an electrical interface. The optical interface is connected to one or more optical cable members of the hybrid cable 300. The first converter 221 is configured to provide conversion between optical signals at its optical interface and electrical signals at its electrical interface. The first converter 221 corresponds to the PoE switch 150 in the communication system described with reference to Fig. 1. The second subsystem 220 also comprises a second converter 222 arranged to supply power to the first converter 221. The second converter 222 comprises an interface connected to electric cable members of the hybrid cable 300. The second converter 222 is a power converter configured to convert electric power received via the hybrid cable 300 into a power format suitable for powering the first converter 221.

In the present embodiment, the second subsystem 220 comprises a wireless transmitter 225 connected to the electrical interface of the first converter 221. The wireless transmitter 225 may for example be a wireless transceiver (such as the WiFi access point 110 described above with reference to Fig 1, or a transmitter in a remote radio head, RRH, for wireless communication services such as 3G, 4G, or 5G) configured to transmit and receive wireless signals.

In the present embodiment, the first converter 221 is a PoE switch 221 of the same type as the PoE switch 150 in the communication system 100 described above with reference to Fig. 1. The PoE switch 221 provides data and electric power to the transmitter 225 via a cable 223. The cable 223 may for example be an Ethernet cable, a category 6 (or cat 6) cable, or some other twisted or untwisted signal transmitting cable. Embodiments may also be envisaged in which the transmitter 225 is powered in some other way. For example, power from the hybrid cable 300 may be provided to the transmitter 225 in a separate conductor instead of being provided by a PoE switch 221 in a cable 223 together with data signals.

Embodiments may also be envisaged in which the second subsystem 220 comprises one or more cameras 224 (for example surveillance cameras), and/or one or more sensors (for example for triggering an alarm) connected to the electrical interface of the first converter 221. The cameras 180 and/or sensors may for example be powered by the converter 221 via the cable 223.

In the present embodiment, line power 212 (for example 230 V alternate current, at a frequency of 50 Hz) is converted by the power converter 211 in the first subsystem 210 to 110 V direct current. The converted electric power may be conveyed through a hybrid cable 300 with smaller diameter than prior art hybrid cables comprising AWG cables.

In the present embodiment, the power converter 211 is of a power converter type for which the primary side is isolated from the secondary side, in order to prevent line power voltage levels from reaching the cable 300, even in case of short circuits or other malfunctions. Such types of power converters 211 are well-known to the person skilled in the art. In order to further increase safety, the first subsystem 210 may for example comprise a current limiting device (for example fuse) for preventing currents above 3 A (or some other threshold, such as 4 A, or 5 A, or 10 A) to enter the cable 300.

In case the cable 300 comprises multiple conductor pairs (or electrical cable members), currents up to 3 A may for example be allowed to pass through each of the conductor pairs. There may for example be one current limiting device per conductor pair.

The hybrid cable 300 may for example be up to 1 km long, and the voltage may drop from 110 V to about 75 V before reaching the second subsystem 220. With a single conductor pair, the hybrid cable 300 may therefore provide about 225 W to the second subsystem 220 (and about 450 W with two conductor pairs). Use of 110 V direct current in the hybrid cable 300 allows the cable 300 to be made sufficiently thin to be blown long distances through ducts, while sufficient power may still be conveyed through the able 300 to the second subsystem 220 despite the power loss in the cable 300. As an alternative to 110 V, lower voltages, such as 100V or 90 V could also be used.

Embodiments may also be envisaged in which the cable 300 may be as long as 2 km, or 3 km, or even up to 4 km. For such longer cables 300, the voltage drop may then be larger.

In the second subsystem 220, the power converter 222 then converts the electrical power received from the hybrid cable 300 into a suitable format for powering the PoE switch 221. The PoE switch 221 may for example receive direct current at a voltage level of 48 V from the power converter 222. As the voltage drop in the cable 300 depends on the length of the cable 300, the power converter 222 employed in the second subsystem 220 may preferably de configured to handle a range of possible input voltage levels. The power converter 222 may for example be adapted to convert 110-75V to 48 V. Since there is a voltage drop in the cable 300, it would not be suitable to remove the converter 222 and instead try to convey 48V in the cable 300.

The wireless transmitter 225 and the converter 221 (or PoE switch 221) may be provided as separate devices with separate casings. The transmitter 225 may for example be arranged at distance (for example at least 0.5 m or 1 m) from the converter 221. However, embodiments may also be envisaged in which the wireless transmitter 225 and the converter 221 may be arranged in the same casing. The wireless transmitter 225 and the converter 221 may for example be integrated parts of a remote radio head (RRH) employed for mobile communications services of the third, fourth, or fifth generation, i.e. 3G, 4G or 5G.

The converter 221 (or PoE switch 221) may for example comprise multiple outputs for conveying data and power to multiple transmitters 225 via multiple cables 223 (for example via multiple Ethernet cables 223).

The power converter 222 may for example be integrated in the same casing as the converter 221 (or PoE switch). If arranged outdoors, the power converter 222 and the converter 221 (or PoE switch) may for example be arranged together in a weather protected (or water resistant, or environmentally sealed) casing.

Fig. 5 is shows a communication system 500 including multiple WiFi access points, according to an embodiment. The communication system 500 comprises a home node 510 which supplies power to a plurality of remote nodes 520 distributed in an area with roads and buildings. Fig. 5 shows the area from above. The home node 510 is a subsystem of the same type as the first subsystem 210 described with reference to Fig. 2. Each of the remote nodes 520 are subsystems of the same type as the second subsystem 220 described with reference to Fig. 2. Each of the remote nodes 520 comprises a WiFi access point 525. The home node 510 supplies the remote nodes 520 with data and electric power via hybrid cables 300.

A single hybrid cable 300 may for example be employed to carry data and electric power indented for multiple remote nodes 520 through a duct. At a remote node 520, the cable 300 may exit the duct and may be opened such that the conductors and optical fibres may be accessed. The hybrid cable 300 may then be branched off into multiple hybrid cables leading through ducts in different directions for supplying data and electric power to respective remote nodes 520.

The hybrid cable 300 may comprise one optical fibre for each remote node 520 (or two fibres for each remote node 520 for conveying data back and forth, respectively), while the same conductor may be employed for carrying power to multiple remote nodes 520. In some embodiments, the hybrid cable 300 may comprise multiple conductors for conveying electrical power to respective different remote nodes 520.

In the present embodiment, the home node 510 provides power and data to six remote nodes 520, each having a power consumption of 30W. Hence, the cable 300 conveys a power of 180 W. In the present embodiment, the remote node located furthest away from the home node 510 is located about 1 km away from the home node 510. As the distance increases, power losses in the cable 300 may increase.

The number of remote nodes 520 (or WiFi access points 525) that can be powered the same cable 300 depends on the power consumption of the remote nodes 520 and the dimensions of the hybrid cable 300. Several hybrid cables 300 may for example be arranged in parallel for conveying data and electric power from the home node 510 to respective collections of remote nodes 520.

Fig. 3 shows a cross section of a hybrid cable 300 used in a communication system according to an embodiment. This hybrid cable 300 may for example be employed in the communication systems 200 and 500 described above with reference to Figs. 2 and 5 respectively.

The hybrid cable 300 (which may also be referred to as a hybrid cable assembly) comprises optical cable members 310, electric cable members 320 and a cable sheathing 330. Each of the optical cable members 310 comprises a signal transmitting member 311 adapted to transmit optical signals along the hybrid cable 300 and a tubular enclosure 312 enclosing the signal transmitting member 311. Each of the electric cable members 320 comprises an electrically conductive interior 321 for conveying electric power along the hybrid cable 300 and an electrically insulating layer 322 enclosing the electrically conductive interior 321. The electrically conductive interiors 321 of the electrical cable members 320 are separated from each other by the electrically insulating layers 322. The cable sheathing 330 encloses the optical cable members 310 and the electric cable members 320.

In the present embodiment, each of the optical cable members 310 is a loose tube fibre arrangement comprising signal transmitting members 311 in the form of multiple optical fibres 311 enclosed by the tubular enclosure 312. The fibres 311 may for example comprise one or more commonly used fibre materials such as silicon dioxide (also known as silica). The tubular enclosure 312 may for example comprise polyamide. Embodiments may also be envisaged in which one or more of the optical cable members 310 are tight buffered arrangements comprising a signal transmitting member in the form of a single optical fibre enclosed by a tubular enclosure (for example a polymer jacket.

Once the hybrid cable 300 has been installed into a duct 190, the ends of the optical fibres 311 may for example be connected to the first and second subsystems 210 and 220 (described above with reference to Fig. 2) via fiber pigtails (for example using fusion splicing).

In the present embodiment, the electrically conductive interior 321 of each of the electric cable members 320 is a stranded wire 321 comprising a plurality of metal strands (for example copper strands). The stranded wire 321 may for example comprise 22 copper strands, each having a diameter of 0. 20 mm, corresponding to an area of 0.75 mm².

The insulating layer 322 may for example comprise one or more materials commonly used for insulation of power cables, such as polyvinyl chloride (PVC) or polyolefin (for example polyethylene or polypropylene). In insulating layers 322 of the different electrical cable members 320 may for example have different colors, such as black and red for plus and minus to be easily distinguishable. The color may for example be provided as a thin layer (e.g. 0.05 mm) at the outer surface of the insulating layer 322.

As the cable is intended for conveying 110 V direct current, the insulating layer 322 for each electric cable member 320 may for example have a thickness of less than or equal to 0.35 mm, or 0.30 mm, or 0.25 mm, or 0.20 mm. If the voltage is kept below 120 V for direct current, the extra-low voltage requirements for IEC 60038:1983 may for example be satisfied.

Although it may be possible to provide hybrid cables including electrical conductors with no separate electrical insulation for each of the electrical conductors (for example by instead integrating electrical conductors in the cable sheathing 330), such types of hybrid cables may be more complicated and/or more expensive to manufacture than the hybrid cable 300. Moreover, it may be more complicated to ensure that power is conveyed safely through such cables than through hybrid cables 300 of the type described with reference to Fig 3.

The cable sheathing 330 may for example comprise polyethylene. The cable sheathing 330 may for example be halogen-free.

In the present embodiment, the hybrid cable 300 comprises a strength member 340. The strength member 340 is located in the center of the hybrid cable 300 and extends axially along the hybrid cable 300 (i.e. along a central axis of the hybrid cable 300). The strength member 340 provides the hybrid cable 300 with rigidity for facilitating blowing (or cable jetting) of the cable 300 into a duct, while still allowing the cable 300 to bend in case the duct is not straight. The strength member 340 is located at the center of the cable 300 for providing the cable 300 with similar resistance to bending all directions. The strength member 340 may for example comprise glass fiber reinforced plastic material.

In the present embodiment, the strength member 340 is solid, i.e. it does not have holes or a hollow interior. Embodiments may also be envisaged in which the strength member 340 has a tubular shape, and wherein at least one of the optical cable members 310 and/or the electrical cable members 320 is arranged in the strength member. Embodiments may also be envisaged in which suitable rigidity is provided to the hybrid cable by a plurality of strength members distributed throughout the cable (e.g. instead of a single strength member 340 located at the center of the cable). Although different types and placements of strength members 340 may be possible, a solid strength member 340 located at the center of the cable 300 is a simple and reliable way to provide suitable rigidity. Hybrid cables according to the embodiment described with reference to Fig. 3 may also be easier and/or cheaper to manufacture than hybrid cables with other types of strength members.

Embodiments may also be envisaged in which the hybrid cable 300 does not comprise a strength member 340. If the hybrid cable 300 is sufficiently light, it may for example be conveniently blown through a duct even without a strength member 340. For heavier cables 300, a strength member 340 may facilitate blowing of the cable 300 into a duct.

In the present embodiment, the optical cable members 310 and the electric cable members 320 are distributed in a ring around the strength member 340. Since, in the present embodiment, the optical cable members 310 and the electric cable members 320 all have equal (or similar, or substantially equal) diameters, this arrangement makes the cable 300 symmetrical. This symmetry allows the cable 300 to behave similarly in all directions, for example during manual handling, or during blowing of the cable through a duct. Rather than only having two electric cable members 320 (for example with high and low potential respectively), the cable 300 comprises four electric cable members 320, for making the cable 300 more symmetric. The increased number of electric cable members 320 may also allow the cable 300 to convey more power.

That the electric cable members 320 and the optical cable members 310 are distributed in a ring around the strength member 340 may be expressed in the following way. The distances from each of the electric cable members 320 to the center of the cable 300 substantially coincides with (or differs by less than for example a factor 1.5 or 1.2 from) the distances from each of the optical cable members 310 to the center of the cable 300.

In the present embodiment, the electric cable members 320 and the optical cable members 310 all have diameters similar (or equal) to the diameter of the strength member 340, which allows them to fit nicely around the strength member 340 to form a compact and symmetrical shaped hybrid cable 300.

The electric cable members 320 and the optical cable members 310 may for example be parallel to the strength member 340 and may extend axially along the cable 300 in a straight manner. In other example configurations, the electric cable members 320 and the optical cable members 310 may for example spiral (or be twisted) around the strength member 340. The electric cable members 320 and the optical cable members 310 may for example be SZ stranded.

The hybrid cable 300 may for example comprise a slit up yarn 350, such as aramide yarn, which may be used for slitting up the cable sheeting 330. The hybrid cable 300 may for example comprise wrapping 360, such as water blocking yarns. The wrapping 360 may for example at least partially fill the space between the electric cable members 320, the optical cable members 310 and the strength member 340.

In the present embodiment, the cable 300 is adapted for conveying direct current at voltages of at most 110 Volt. At this voltage level, the insulation 322 of the conductors 320 need not be that thick for the cable 300 to safely convey electricity. Moreover, the cable 300 is intended to be arranged in a duct which will protect additional protection. The insulation 322 may for example be only 0.20 mm thick.

In the present embodiment, each electrical cable member 320 is arranged close to another electrical cable member 320 (they may for example be in abutment to each other). The distance D1 from one of the electric cable members 320 to the electrically conductive interior 321 of the other electric cable member 320 is therefore not much longer than the thickness of the insulating layer 322. The distance D1 from one of the electric cable members 320 to the electrically conductive interior 321 of the other electric cable member 320 may for example be at most 0.35 mm, or 0.30 mm, or 0.25 mm. In other words, the distance between the electrically conductive interiors 321 of two of the electric cable members 320 may be at most0.7 mm, or 0.6 mm, or 0.5 mm.

In the present example, each optical cable member 310 is arranged close to an electric cable member 320 (they may for example be arranged in abutment to each other). The distance D2 from the optical cable member 310 to the electrically conductive interior 321 of an electric cable member 320 is therefore not much longer than the thickness of the insulating layer 322. The distance D2 from the optical cable member 310 to the electrically conductive interior 321 of an electric cable member 320 may for example be at most 0.35 mm, or 0.3 mm, or 0.25 mm.

The distances D1 and D2 may be longer if the electric cable members 320 and the optical cable members 310 are arranged at a distance from each other, but a compact configurations are preferred, so as to provide a hybrid cable 300 with small diameter.

The thin insulation 322 allows the hybrid cable 300 to have a relatively small diameter D4. In the present embodiment, the diameter D4 of the hybrid cable 300 is 5.6 mm. Such thin cables may easily be blown over a kilometer into ducts of inner diameter 10 mm. Even hybrid cables of diameter up to 7 mm may be blown through such ducts. As the diameter of the cable approaches the diameter of the duct, the distance the cable can be easily blown through the duct typically decreases.

In the present embodiment, the cable 300 is adapted for conveying current of at most 3 A. This allows the electrically conductive interiors to be made quite thin. In the present embodiment, the electrically conductive interiors each have a surface area of 0.75mm².

In the present embodiment, the diameter D3 of the electric cable members 320 (including the electrically conductive interior 321 and the insulation 322) is 1.55 mm.

In the present embodiment, the weight of the hybrid cable 300 is about 45 kg/km (with 12 optical fibres 311 in each of the two optical cable members 310). This is significantly lighter than many prior art hybrid cables, and facilitates blowing of the cable 300 through ducts.

Fig. 4 shows a cross section of hybrid cable 400 used in a communication system according to an embodiment. The cable 400 is similar to the hybrid cable 300 described with reference to Fig. 3, except that one of the optical cable members 310 has been replaced by a filler cable 410 (i.e. the hybrid cable 400 comprises only a single optical cable member 310). The filler cable 410 serves the make the cable 400 symmetric in cases where a single optical cable member 310 is sufficient for conveying the optical signals. The hybrid cable 400 may for example be employed in the systems 200 and 500, described with reference to Figs. 2 and 5 instead of the hybrid cable 300.

The hybrid cables 300 and 400, described with reference to Figs 3 and 4 may for example be installed into ducts 190 via blowing (also called cable jetting). An end of the cable 300 (or the cable 400) may be inserted into the duct 190 and the cable 300 may be blown through the duct 190 via use of compressed air. The cable 300 may for example be pushed into the duct 190 while blowing, for increasing the distance it can be blown through the duct 190. As described above, the cable 300 may for example have a diameter D4 of 5.6 mm. If the inner diameter of the duct is 10mm, such thin cables 300 may be blown long distances through the duct (for example at least 500 meters, or 1000 meters).

The person skilled in the art realizes that the present invention is by no means limited to the preferred embodiments described above. On the contrary, many modifications and variations are possible within the scope of the appended claims. For example, although only example cables with four conductors 320 and one or two loose tube fibre arrangements 310 are shown in Figs 3 and 4, it will be appreciated that hybrid cables may comprise more or less any number of connectors and fibres, and that the conductors and fibres may be distributed in many different ways in hybrid cables. Although examples have been described above in which the hybrid cables 300 and 400 are employed for powering PoE switches and WiFi access points, it will be appreciated that the hybrid cables 300 and 400 may be employed for powering other types of electrical equipment. The hybrid cables 300 and 400 may for example be employed for powering components or devices employed for providing 3G, 4G or 5G communication services, or other types of wireless communication. The hybrid cables 300 and 400 may for example be employed for powering other types of equipment, such as cameras, or various sensors. Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A communication system (200) comprising:
a duct (190);
a hybrid cable (300, 400) for conveying electric power at least 100 meters through the duct, wherein at least a portion of the hybrid cable is located in the duct;
a first converter (221) having an optical interface and an electrical interface, wherein the first converter is configured to provide conversion between optical signals at the optical interface and electrical signals at the electrical interface; and
a fourth converter (213) having an optical interface and an electrical interface, wherein the fourth converter is configured to provide conversion between optical signals at its optical interface and electrical signals at its electrical interface,
wherein the hybrid cable comprises:
an optical cable member (310) comprising a signal transmitting member (311) adapted to transmit optical signals along the hybrid cable and a tubular enclosure (312) enclosing the signal transmitting member, wherein the optical cable member is connected to the optical interface of the first converter and the optical interface of the fourth converter;
two electric cable members (320), wherein each of the electric cable members comprises an electrically conductive interior (321) for conveying electric power along the hybrid cable and an electrically insulating layer (322) enclosing the electrically conductive interior; and
a cable sheathing (330) enclosing the optical cable member and the electric cable members,
**characterized in that**
a thickness (D1, D2) of the electrically insulating layer of at least one of the electrical cable members is less than or equal to 0.35 mm, and **in that** the communication system further comprises:
a second converter (222) arranged to supply power to the first converter, wherein the second converter comprises an interface connected to the electric cable members of the hybrid cable, wherein the second converter is a power converter configured to convert electric power from a first power format received via the electric cable members into a second power format for powering the first converter, and wherein the first power format includes direct current at a voltage level of at least 75 Volt and at most 110 Volt; and
a third converter (211) connected to the electric cable members of the hybrid cable for providing direct current at a first voltage level to the electric cable members of the hybrid cable, wherein the third converter is a power converter configured to convert a second voltage level into the first voltage level and/or configured to convert alternate current into direct current.

2. The communication system of claim 1, wherein a distance (D1) from a first electric cable member of the electric cable members to the electrically conductive interior of a second electric cable member of the electric cable members is less than 0.35 mm, or wherein a distance (D2) from the optical cable member to the electrically conductive interior of an electric cable member of the electric cable members is less than 0.35 mm.

3. The communication system of any of the preceding claims, wherein a diameter (D3) of each of the electric cable members is at most 2 mm.

4. The communication system of any of the preceding claims, wherein a diameter (D4) of the hybrid cable is at most 7.5 mm, preferably at most 7 mm, and most preferably at most 6 mm.

5. The communication system of any of the preceding claims, wherein the hybrid cable further comprises a strength member (340) centrally located in the hybrid cable and extending axially along the hybrid cable, wherein the optical cable member and the electric cable members are distributed around the strength member.

6. The communication system of claim 5, wherein the hybrid cable comprises:
two optical cable members (310), wherein each of the optical cable members comprises a signal transmitting member (311) adapted to transmit optical signals along the hybrid cable and a tubular enclosure (312) enclosing the signal transmitting member; and
four electric cable members (320), wherein each of the electric cable members comprises an electrically conductive interior (321) for conveying electric power along the hybrid cable and an electrically insulating layer (322) enclosing the electrically conductive interior,
wherein the cable sheathing encloses the strength member, the optical cable members and the electric cable members, and wherein the optical cable members and the electric cable members are distributed around the strength member.

7. The communication system of any of the preceding claims, further comprising:
a device connected to the electrical interface of the first converter, wherein the device is:
a camera (224);
a sensor; or
a wireless transmitter (225).

8. The communication system of claim 1, wherein a distance along the duct between at least one opening of the duct, via which the first and second converters are connected to the hybrid cable, and at least one opening of the duct, via which the third and fourth converters are connected to the hybrid cable, is at least 100 meters.

9. An installation method comprising:
providing a hybrid cable (300, 400) for conveying electric power at least 100 meters through a duct (190), wherein the hybrid cable comprises:
an optical cable member (310) comprising a signal transmitting member (311) adapted to transmit optical signals along the hybrid cable and a tubular enclosure (312) enclosing the signal transmitting member;
two electric cable members (320), wherein each of the electric cable members comprises an electrically conductive interior (321) for conveying electric power along the hybrid cable and an electrically insulating layer (322) enclosing the electrically conductive interior; and
a cable sheathing (330) enclosing the optical cable member and the electric cable members,
the method further comprising:
inserting an end of the hybrid cable into the duct;
blowing at least part of the hybrid cable at least partly through the duct;
connecting the optical cable member to an optical interface of a first converter (221), wherein the first converter is configured to provide conversion between optical signals at the optical interface and electrical signals at an electrical interface; and
connecting the optical cable member to an optical interface of a fourth converter (213), wherein the fourth converter is configured to provide conversion between optical signals at its optical interface and electrical signals at an electrical interface of the fourth converter,
**characterized in that** a thickness (D1, D2) of the electrically insulating layer of at least one of the electrical cable members is less than or equal to 0.35 mm, and **in that** the method further comprises:
connecting the electric cable members to an interface of a second converter (222), wherein the second converter is arranged to supply power to the first converter, wherein the second converter is a power converter configured to convert electric power from a first power format received via the electric cable members into a second power format for powering the first converter, and wherein the first power format includes direct current at a voltage level of at least 75 Volt and at most 110 Volt; and
connecting the electric cable members to a third converter (211), wherein the third converter is arranged to provide direct current at a first voltage level to the electric cable members of the hybrid cable, wherein the third converter is a power converter configured to convert a second voltage level into the first voltage level and/or configured to convert alternate current into direct current.

10. The method of claim 9, comprising:
blowing at least part of the hybrid cable through at least 100 meters of the duct, preferably through at least 500 meters of the duct.

11. The method of any of claims 9-10, wherein the duct has an inner diameter of at most 10 mm.

## Patentansprüche

1. Kommunikationssystem (200) umfassend:
einen Kanal (190);
ein Hybridkabel (300, 400) zum Leiten elektrischer Energie mindestens 100 Meter durch den Kanal, wobei sich mindestens ein Abschnitt des Hybridkabels in dem Kanal befindet;
ein erster Konverter (221), der eine optische Schnittstelle und eine elektrische Schnittstelle aufweist, wobei der erste Konverter konfiguriert ist, eine Konvertierung zwischen optischen Signalen an der optischen Schnittstelle und elektrischen Signalen an der elektrischen Schnittstelle bereitzustellen; und
ein vierter Konverter (213), der eine optische Schnittstelle und eine elektrische Schnittstelle aufweist, wobei der vierte Konverter konfiguriert ist, eine Konvertierung zwischen optischen Signalen an seiner optischen Schnittstelle und elektrischen Signalen an seiner elektrischen Schnittstelle durchzuführen,
wobei das Hybridkabel umfasst:
ein optisches Kabelelement (310), umfassend ein Signalsendeelement (311), angepasst zum Senden optischer Signale entlang des Hybridkabels und einer röhrenförmigen Einhausung (312), die das Signalsendeelement einschließt, wobei das optische Kabelelement mit der optischen Schnittstelle des ersten Konverters und der optischen Schnittstelle des vierten Konverters verbunden ist;
zwei elektrische Kabelelemente (320), wobei jedes der elektrischen Kabelelemente ein elektrisch leitendes Inneres (321), um elektrische Energie entlang des Hybridkabels zu leiten, und eine elektrisch isolierende Schicht (322), die das elektrisch leitende Innere umschließt, umfasst; und
eine Kabelscheide (330), die das optische Kabelelement und die elektrischen Kabelelemente umschließt,
**dadurch gekennzeichnet, dass**
eine Dicke (D1, D2) der elektrisch isolierenden Schicht des mindestens einen der elektrischen Kabelelemente ist geringer als oder gleich 0,35 mm, und dass das Kommunikationssystem ferner umfasst:
einen zweiten Konverter (222), der angeordnet ist, um den ersten Konverter mit Energie zu versorgen, wobei der zweite Konverter eine Schnittstelle umfasst, die mit den elektrischen Kabelelementen des Hybridkabels verbunden sind, wobei der zweite Konverter ein Leistungskonverter ist, der konfiguriert ist, um elektrische Energie von einem ersten Leistungsformat, das über die elektrischen Kabelelemente empfangen wird, in ein zweites Leistungsformat zu konvertieren, um den ersten Konverter mit Energie zu versorgen, und wobei das erste Energieformat Gleichstrom auf einer Spannungsebene von mindestens 75 Volt und höchstens 110 Volt umfasst; und
einen dritten Konverter (211), der mit den elektrischen Kabelelementen des Hybridkabels verbunden ist, um Gleichstrom auf einer ersten Spannungsebene an die elektrischen Kabelelemente des Hybridkabels bereitzustellen, wobei der dritte Konverter ein Leistungskonverter ist, der konfiguriert ist, einen zweiten Spannungspegel auf einen ersten Spannungspegel zu konvertieren und/oder konfiguriert, einen Wechselstrom in Gleichstrom zu konvertieren.

2. Kommunikationssystem nach Anspruch 1, wobei eine Distanz (D1) von einem ersten elektrischen Kabelelement der elektrischen Kabelelemente zu dem elektrisch leitenden Inneren eines zweiten elektrischen Kabelelements der elektrischen Kabelelemente geringer als 0,35 mm ist, oder wobei eine Distanz (D2) von dem optischen Kabelelement zu dem elektrisch leitenden Inneren eines elektrischen Kabelelements der elektrischen Kabelelemente geringer als 0,35 mm ist.

3. Kommunikationssystem nach einem der vorhergehenden Ansprüche, wobei ein Durchmesser (D3) jedes der elektrischen Kabelelemente maximal 2 mm beträgt.

4. Kommunikationssystem eines der vorhergehenden Ansprüche, wobei ein Durchmesser (D4) des Hybridkabels maximal 7,5 mm beträgt, vorzugsweise maximal 7 mm und besonders vorzugsweise maximal 6 mm.

5. Kommunikationssystem nach einem der vorhergehenden Ansprüche, wobei das Hybridkabel weiter ein Verstärkungselement (340) umfasst, das zentral im Hybridkabel platziert ist und sich axial entlang des Hybridkabels erstreckt, wobei das optische Kabelelement und die elektrischen Kabelelemente um das Verstärkungselement verteilt sind.

6. Kommunikationssystem nach Anspruch 5, wobei das Hybridkabel umfasst:
zwei optische Kabelelemente (310), wobei jedes der optischen Kabelelemente ein Signalsendeelement (311) umfasst, das angepasst ist, optische Signale entlang des Hybridkabels zu leiten, und eine röhrenförmige Einhausung, (312), die das signalleitende Element umschließt; und
vier elektrische Kabelelemente (320), wobei jedes der elektrischen Kabelelemente ein elektrisch leitendes Inneres (321), um elektrische Energie entlang des Hybridkabels zu leiten, und eine elektrisch isolierende Schicht (322), die das elektrisch leitende Innere umschließt, umfasst,
wobei die Kabelscheide das Verstärkungselement, die optischen Kabelelemente und die elektrischen Kabelelemente umschließt, und wobei die optischen Kabelelemente und die elektrischen Kabelelemente entlang des Verstärkungselements verteilt sind.

7. Kommunikationssystem nach einem der vorhergehenden Ansprüche, ferner
umfassend:
eine Vorrichtung, verbunden mit der elektrischen Schnittstelle des ersten Konverters,
wobei die Vorrichtung:
eine Kamera (224);
ein Sensor; oder
ein Drahtlossender (225) ist.

8. Kommunikationssystem nach Anspruch 1, wobei eine Distanz entlang des Kanals zwischen mindestens einer Öffnung des Kanals, über die die ersten und zweiten Konverter mit dem Hybridkabel verbunden sind, und mindestens eine Öffnung des Kanals, über den die dritten und vierten Konverter mit dem Hybridkabel verbunden sind, mindestens 100 Meter beträgt.

9. Installationsverfahren, umfassend:
Bereitstellung eines Hybridkabels (300, 400) zum Leiten elektrischer Energie mindestens 100 Meter durch einen Kanal (190), wobei das Hybridkabel umfasst:
ein optisches Kabelelement (310), das ein Signalsendeelement (311) umfasst, das angepasst ist, optische Signale entlang des Hybridkabels zu leiten, und eine röhrenförmige Einhausung, (312), die das signalleitende Element umschließt;
zwei elektrische Kabelelemente (320), wobei jedes der elektrischen Kabelelemente ein elektrisch leitendes Inneres (321), um elektrische Energie entlang des Hybridkabels zu leiten, und eine elektrisch isolierende Schicht (322), die das elektrisch leitende Innere umschließt, umfasst; und
eine Kabelscheide (330), die das optische Kabelelement und die elektrischen Kabelelemente umschließt,
das Verfahren ferner umfassend:
Einführen eines Endes des Hybridkabels in den Kanal;
Blasen von mindestens einem Abschnitt des Hybridkabels mindestens teilweise durch den Kanal;
Verbinden des optischen Kabelelements mit einer optischen Schnittstelle eines ersten Konverters (221), wobei der erste Konverter konfiguriert ist, eine Konvertierung zwischen optischen Signalen an der optischen Schnittstelle und elektrischen Signalen an einer elektrischen Schnittstelle aufweist; und
Verbindungen des optischen Kabelelements mit einer optischen Schnittstelle eines vierten Konverters (213), wobei der vierte Konverter konfiguriert ist, eine Konvertierung zwischen optischen Signalen an seiner optischen Schnittstelle und elektrischen Signalen an einer elektrischen Schnittstelle aufweist,
**dadurch gekennzeichnet, dass** eine Dicke (D1, D2) der elektrisch isolierenden Schicht des mindestens einen der elektrischen Kabelelemente geringer als oder gleich 0,35 mm ist, und dass das Verfahren ferner umfasst:
Verbinden der elektrischen Kabelelemente mit einer Schnittstelle eines zweiten Konverters (222), wobei der zweite Konverter angeordnet ist, den ersten Konverter mit Strom zu versorgen, wobei der zweite Konverter ein Leistungskonverter ist, der konfiguriert ist, elektrische Energie von einem ersten Energieformat, das über die elektrischen Kabelelemente empfangen wird, in ein zweites Energieformat zu konvertieren, um den ersten Konverter mit Energie zu versorgen, und wobei das erste Energieformat Gleichstrom auf einer Spannungsebene von mindestens 75 Volt und höchstens 110 Volt umfasst; und
Verbinden der elektrischen Kabelelemente mit einem dritten Konverter (211), wobei der dritte Konverter angeordnet ist, die elektrischen Kabelelemente des Hybridkabels mit Gleichstrom auf einer ersten Spannungsebene zu versorgen, wobei der dritte Konverter ein Leistungskonverter ist, der konfiguriert ist, einen zweiten Spannungspegel auf einen ersten Spannungspegel zu konvertieren und/oder konfiguriert ist, einen Wechselstrom in Gleichstrom zu konvertieren.

10. Verfahren nach Anspruch 9, umfassend:
Blasen von mindestens einem Abschnitt des Hybridkabels durch mindestens 100 Meter des Kanals, vorzugsweise durch mindestens 500 Meter des Kanals.

11. Verfahren nach einem der Ansprüche 9 bis 10, wobei der Kanal einen Innendurchmesser von maximal 10 mm aufweist.

## Revendications

1. Système de communication (200) comprenant :
une ligne (190) ;
un câble hybride (300,400) pour transporter de l'énergie électrique sur au moins 100 m à travers la ligne, dans lequel au moins une portion du câble hybride est située dans la ligne ;
un premier convertisseur (221) ayant une interface optique et une interface électrique, dans lequel le premier convertisseur est configuré pour fournir une conversion entre les signaux optiques au niveau de l'interface optique et les signaux électriques au niveau de l'interface électrique ; et
un quatrième convertisseur (213) ayant une interface optique et une interface électrique, dans lequel le quatrième convertisseur est configuré pour fournir une conversion entre les signaux optiques au niveau de son interface optique et les signaux électriques au niveau de son interface électrique,
dans lequel le câble hybride comprend :
un élément de câble optique (310) comprenant un élément de transmission de signal (311) adapté pour transmettre des signaux optiques le long du câble hybride et une enveloppe tubulaire (312) renfermant l'élément de transmission de signal, dans lequel l'élément de câble optique est connecté à l'interface optique du premier convertisseur et l'interface optique du quatrième convertisseur ;
deux éléments de câble électrique (320), dans lequel chacun des éléments de câble électrique comprend un intérieur électriquement conducteur (321) pour transporter la puissance électrique le long du câble hybride et une couche électriquement isolante (322) renfermant l'intérieur électriquement conducteur ; et
une gaine de câble (330) renfermant l'élément de câble optique et les éléments de câble électrique,
**caractérisé en ce que**
une épaisseur (D1,D2) de la couche électriquement isolante d'au moins un des éléments de câble électrique est inférieure ou égale à 0.35mm et **en ce que** le système de communication comprend en outre :
un second convertisseur (222) agencé pour alimenter électriquement le premier convertisseur, dans lequel le second convertisseur comprend une interface connectée aux éléments de câble électrique du câble hybride, dans lequel le second convertisseur est un convertisseur de puissance configuré pour convertir une puissance électrique d'un premier format de puissance reçu via les éléments de câbles électriques en un second format de puissance pour alimenter le premier convertisseur, et dans lequel le premier format de puissance inclut un courant direct à un niveau de tension d'au moins 75 volts est au maximum 110 volts ; et
un troisième convertisseur (211) connecté aux éléments de câble électrique du câble hybride pour fournir un courant direct à un premier niveau de tension aux éléments de câble électrique du câble hybride, dans lequel le troisième convertisseur est un convertisseur de puissance configuré pour convertir un second niveau de tension en le premier niveau de tension et/ou configuré pour convertir un courant alternatif en courant direct.

2. Système de communication selon la revendication 1, dans lequel une distance (D1) d'un premier élément de câble électrique des éléments de câble électrique à l'intérieur électriquement conducteur d'un second élément de câble électrique des éléments de câble électrique est inférieur à 0.35mm, ou dans lequel une distance (D2) de l'élément de câble optique à l'intérieur électriquement conducteur d'un élément de câble électrique des éléments de câbles électriques est inférieur à 0.35mm.

3. Système de communication selon une quelconque des revendications précédentes, dans lequel un diamètre (D3) de chacun des éléments de câble électrique est au maximum de 2mm.

4. Système de communication selon une quelconque des revendications précédentes, dans lequel un diamètre (D4) du câble hybride est au maximum de 7.5mm, de préférence au maximum de 7mm et de manière la plus préférée au maximum de 6mm.

5. Système de communication selon une quelconque des revendications précédentes, dans lequel le câble hybride comprend en outre un élément de renforcement (340) situé centralement dans le câble hybride et s'étendant axialement le long du câble hybride, dans lequel l'élément de câble optique et des éléments de câbles électriques sont distribués autour de l'élément de renforcement.

6. Système de communication selon la revendication 5, dans lequel le câble hybride comprend :
deux éléments de câble optique (310), dans lequel chacun des éléments de câble optique comprend un élément de transmission de signal (311) adapté pour transmettre des signaux optiques le long du câble hybride et une enveloppe tubulaire (312) renfermant l'élément de transmission de signal ; et
quatre éléments de câble électrique (320), dans lequel chacun des éléments de câble électrique comprend un intérieur électriquement conducteur (321) pour transporter la puissance électrique long du câble hybride et une couche électriquement isolante (322) renfermant l'intérieur électriquement conducteur,
dans lequel la gaine de câble renferme l'élément de renforcement, les éléments de câble optique les éléments de câbles électriques et dans lequel les éléments de câble optique et les éléments de câble électrique sont distribués autour de l'élément de renforcement.

7. Système de communication selon une quelconque des revendications précédentes, comprenant en outre :
un dispositif connecté à l'interface électrique du premier convertisseur,
dans lequel le dispositif est :
une caméra (224) ;
un capteur ; ou
un émetteur sans fil (225).

8. Système de communication selon la revendication 1, dans lequel une distance le long de la ligne entre au moins une ouverture de la ligne, via laquelle le premier et le second convertisseur sont connectés au câble hybride et au moins une ouverture de la ligne, via laquelle le troisième et quatrième convertisseur sont connectés au câble hybride est d'au moins 100 m.

9. Procédé d'installation comprenant de
fournir un câble hybride (300,400) pour transporter l'énergie électrique sur au moins 100 m à travers une ligne (190), dans lequel le câble hybride comprend :
un élément de câble optique (310) comprenant un élément de transmission de signal (311) adapté pour transmettre des signaux optiques le long du câble hybride et une enveloppe tubulaire (312) renfermant l'élément de transmission de signal ;
deux éléments de câble électriques (320), dans lequel chacun des éléments de câble électrique comprend un intérieur électriquement conducteur (321) pour transporter la puissance électrique le long du câble hybride et une couche électriquement isolante (322) renfermant l'intérieur électriquement conducteur ; et
une gaine de câble (330) renfermant l'élément de câble optique et les éléments de câble électrique,
le procédé comprenant en outre de :
insérer une extrémité du câble hybride dans la ligne ;
souffler au moins une partie du câble hybride au moins partiellement à travers la ligne ;
connecter l'élément de câble optique à une interface optique d'un premier convertisseur (221), dans lequel le premier convertisseur est configuré pour fournir une conversion entre les signaux optiques au niveau de l'interface optique et des signaux électriques au niveau d'une interface électrique ; et
connecter l'élément de câble optique à une interface optique d'un quatrième convertisseur (213), dans lequel le quatrième convertisseur est configuré pour fournir une conversion entre les signaux optiques au niveau de son interface optique et des signaux électriques au niveau d'une interface électrique du quatrième convertisseur,
**caractérisée en ce que** une épaisseur (D1,D2)à de la couche électriquement isolante d'au moins un des éléments de câble électrique est inférieure ou égale à 0.35mm et **en ce que** le procédé comprend en outre de :
connecter les éléments de câble électrique à une interface d'un second convertisseur (222), dans lequel le second convertisseur est agencé pour alimenter électriquement le premier convertisseur, dans lequel le second convertisseur est un convertisseur de puissance configuré pour convertir une puissance électrique d'un premier format de puissance reçu via les éléments de câble électriques en un second format de puissance pour alimenter le premier convertisseur, et dans lequel le premier format de puissance inclut un courant direct à un niveau de tension d'au moins 75 volts et d'au moins 110 volts; et
connecter les éléments de câble électrique à un troisième convertisseur (211), dans lequel le troisième convertisseur est agencé pour fournir un courant direct à un premier niveau de tension aux éléments de câbles électriques du câble hybride, dans lequel le troisième convertisseur est un convertisseur de puissance configuré pour convertir un second niveau de tension en le premier niveau de tension et/ou configuré pour convertir un courant alternatif en courant direct.

10. Procédé selon la revendication 9, comprenant de :
souffler au moins une partie du câble hybride à travers au moins 100 m de la ligne, de préférence à travers au moins 500 m de la ligne.

11. Procédé selon une quelconque des revendications 9-10, dans lequel la ligne a un diamètre intérieur de 10 mm au maximum.
